(19) Europäisches Patentamt
European Patent Office
Office européen des brevets

(11) **EP 4 246 620 A1**

(12) **EUROPEAN PATENT APPLICATION**
published in accordance with Art. 153(4) EPC

(43) Date of publication:
**20.09.2023 Bulletin 2023/38**

(21) Application number: **21897604.1**

(22) Date of filing: **28.10.2021**

(51) International Patent Classification (IPC):
**H01M 4/14** (2006.01)  **H01M 4/62** (2006.01)
**H01M 10/06** (2006.01)  **H01M 10/12** (2006.01)

(52) Cooperative Patent Classification (CPC):
**H01M 4/14; H01M 4/62; H01M 10/06; H01M 10/12**

(86) International application number:
**PCT/JP2021/039748**

(87) International publication number:
**WO 2022/113628 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.11.2020 JP 2020197578**

(71) Applicant: **GS Yuasa International Ltd.
Kisshoin, Minami-ku,
Kyoto-shi, Kyoto 601-8520 (JP)**

(72) Inventors:
• **OBAYASHI Chihiro
Kyoto-shi, Kyoto 601-8520 (JP)**
• **KAGOHASHI Hiroki
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(54) **LEAD ACID STORAGE BATTERY**

(57) A lead-acid battery 1 disclosed herein includes an element 11, an electrolyte solution, and a container 12 that houses the element 11 and the electrolyte solution. The element 11 includes a plurality of stacked positive electrode plates 2 and a plurality of stacked negative electrode plates 3. The negative electrode plate 3 contains a negative electrode material. The negative electrode material contains a polymer compound. The polymer compound has a peak in a range of 3.2 ppm or more and 3.8 ppm or less in a chemical shift of $^1$H-NMR spectrum measured using deuterated chloroform as a solvent. The content of the polymer compound in the negative electrode material is 15 ppm or more and 400 ppm or less on a mass basis. The pull-out load when the element 11 is pulled out from the container 12 is 1.5 times or more the weight of the element 11.

Fig. 1

EP 4 246 620 A1

**Description**

The present invention relates to a lead-acid battery.

BACKGROUND ART

Lead-acid batteries are in use for various applications, including automotive and industrial applications. In lead-acid batteries, at least one of high charge acceptance performance, a small amount of overcharge, and a low short circuit incidence becomes particularly important, depending on the application thereof.

Patent Document 1 (JP-A-2003-051288) discloses "a container for a lead-acid battery that houses a plurality of elements, wherein the container is divided into a plurality of battery cell chambers by partitions, a width in an element stacking direction of cell chambers positioned at both ends in the cell chambers is configured to be narrower than a width in the same direction of other cell chambers, and all pull-out loads of the elements after electrolyte solution filling are made substantially equivalent.". Further, in Table 1 of Patent Document 1, "a pull-out load of an element housed in an intermediate cell" and "a pull-out load of an element housed in both end cells" are described.

Patent Document 2 (JP-A-2009-123433) discloses "a method for producing a valve-regulated lead-acid battery in which an element including a positive electrode plate, a negative electrode plate, and a separator is disposed in a container, the method comprising the steps of: preparing a positive electrode plate using lead powder and red lead with a red lead conversion rate of 20% by mass to 80% by mass as positive active material raw materials; and disposing the element in the container such that a pressing force of 9.8 to 34.3 kPa is applied to the element.".

Patent Document 3 (JP-A-60-182662) discloses "a lead-acid battery in which a copolymer of propylene oxide and ethylene oxide is added to a negative electrode plate active material in combination with lignin sulfonate.".

PRIOR ART DOCUMENTS

PATENT DOCUMENTS

Patent Document 1: JP-A-2003-051288
Patent Document 2: JP-A-2009-123433
Patent Document 3: JP-A-60-182662

SUMMARY OF THE INVENTION

PROBLEMS TO BE SOLVED BY THE INVENTION

Currently, a lead-acid battery capable of achieving a small amount of overcharge, high charge acceptance performance, and a low short circuit incidence in a well-balanced manner is required.

MEANS FOR SOLVING THE PROBLEMS

A lead-acid battery according to one aspect of the present invention is a lead-acid battery including an element, an electrolyte solution, and a container that houses the element and the electrolyte solution, in which the element includes a plurality of stacked positive electrode plates and a plurality of stacked negative electrode plates, the negative electrode plate contains a negative electrode material, the negative electrode material contains a polymer compound, the polymer compound has a peak in the range of 3.2 ppm or more and 3.8 ppm or less in a chemical shift of a $^1$H-NMR spectrum measured using deuterated chloroform as a solvent, the content of the polymer compound in the negative electrode material is 15 ppm or more and 400 ppm or less on a mass basis, and the pull-out load when the element is pulled out from the container is 1.5 times or more the weight of the element.

A lead-acid battery according to another aspect of the present invention is a lead-acid battery including an element, an electrolyte solution, and a container that houses the element and the electrolyte solution, in which the element includes a plurality of stacked positive electrode plates and a plurality of stacked negative electrode plates, the negative electrode plate contains a negative electrode material, the negative electrode material contains a polymer compound, the polymer compound contains an oxy $C_{2-4}$ alkylene unit as a repeating structure, the content of the polymer compound in the negative electrode material is 15 ppm or more and 400 ppm or less on a mass basis, and the pull-out load when the element is pulled out from the container is 1.5 times or more the weight of the element.

BRIEF DESCRIPTION OF THE DRAWINGS

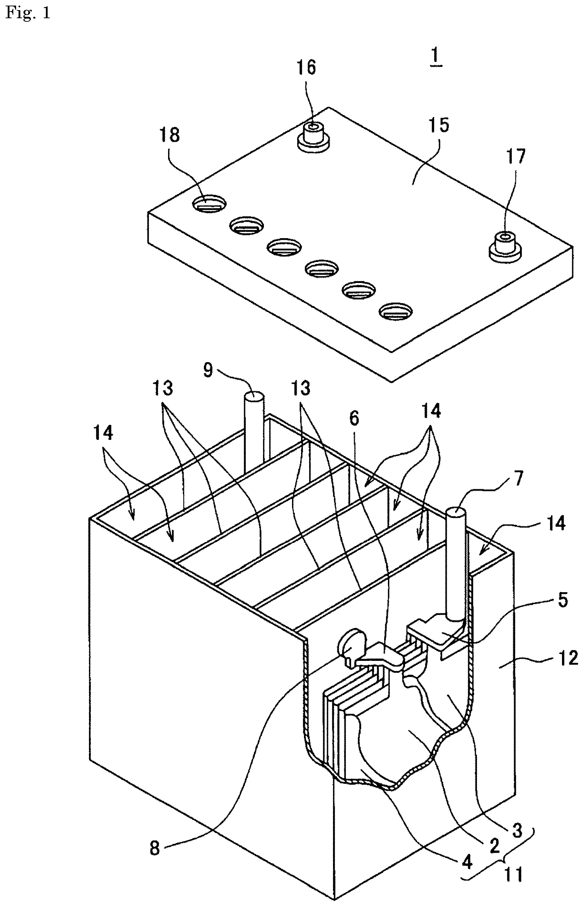

Fig. 1 is a partially cutaway exploded perspective view showing an appearance and an internal structure of a lead-acid battery according to one aspect of the present invention.

MODE FOR CARRYING OUT THE INVENTION

Hereinafter, embodiments of the present invention will be described with reference to examples, but the present invention is not limited to the examples described below. In the description below, specific numerical values and materials may be shown as examples, but the other numerical values and materials may be used as long as the effects of the present invention are obtained. In the present specification, a range of description "numerical value A to numerical value B" includes the numerical value A and the numerical value B.

[Lead-acid battery]

A lead-acid battery according to an embodiment of the present invention includes an element, an electrolyte solution, and a container that houses the element and the electrolyte solution. The element includes a plurality of stacked positive electrode plates and a plurality of stacked negative electrode plates. The negative electrode plate contains a negative electrode material. The negative electrode material contains a polymer compound. Hereinafter, the polymer compound may be referred to as a "polymer compound (P)". A content of the polymer compound (P) in the negative electrode material is 15 ppm or more and 400 ppm or less on a mass basis. A pull-out load when the element is pulled out from the container is 1.5 times or more a weight of the element.

A first example of the polymer compound (P) is a polymer compound having a peak in the range of 3.2 ppm or more and 3.8 ppm or less in a chemical shift of a $^1$H-NMR spectrum measured using deuterated chloroform as a solvent. In this specification, unless otherwise specified, the $^1$H-NMR spectrum is a spectrum measured using deuterated chloroform as a solvent. A second example of the polymer compound (P) is a polymer compound containing a repeating structure of oxy $C_{2-4}$ alkylene units. The polymer compound contained in the first example of the polymer compound (P) and the polymer compound contained in the second example of the polymer compound (P) overlap at least partially. The description of the polymer compound (P) is applicable to both the first example and the second example of the polymer compound (P) unless otherwise specified. As the polymer compound (P), a commercially available polymer compound may be used. Alternatively, the polymer compound (P) may be synthesized by a known method.

That is, the negative electrode material of the lead-acid battery according to an embodiment of the present invention contains a polymer compound satisfying the following condition (i) as the polymer compound (P).

(i) Has a peak in the range of 3.2 ppm or more and 3.8 ppm or less in a chemical shift of $^1$H-NMR spectrum measured using deuterated chloroform as a solvent.

The negative electrode material of the lead-acid battery according to another embodiment of the present invention contains a polymer compound satisfying the following condition (ii) as the polymer compound (P).

(ii) Contains an oxy $C_{2-4}$ alkylene unit as a repeating structure.

As a result of studies, the inventors of the present application have newly found that a lead-acid battery having good characteristics can be obtained when the negative electrode material contains the polymer compound (P) in the above content and the pull-out load of the element is in the above range. Specifically, by satisfying the above conditions, a lead-acid battery capable of achieving a small amount of overcharge, high charge acceptance performance, and a low permeation short circuit incidence in a well-balanced manner is obtained. The present invention is based on this new finding.

By reducing the amount of overcharge, gas generation during overcharge can be suppressed, thereby suppressing a decrease in the electrolyte solution (hereinafter, it may be referred to as "liquid decrease"). As a result, it is advantageous for prolonging the life of the lead-acid battery. By enhancing the charge acceptance performance, regenerative performance can be enhanced, and sulfation can be prevented.

It is considered that the polymer compound (P) thinly covers the surface of the negative active material. Therefore, it is considered that the polymer compound (P) suppresses growth of dendrite due to precipitation of lead ions dissolved from the negative active material on the negative active material. When the pull-out load ratio is high, the plate interval is narrowed, and in general, a permeation short circuit is likely to occur. However, when the negative electrode material contains an appropriate amount of the polymer compound (P), the growth of dendrite is suppressed, so that a permeation short circuit can be suppressed even if the plate interval is narrow. Also, when the pull-out load is high, it is considered that movement of the polymer compound (P) is suppressed and the polymer compound (P) tends to stay in the negative electrode plate. As a result, the higher the pull-out load is, the higher the short-circuit suppression effect of the polymer compound (P) may be. In addition, when the pull-out load ratio is high, the plate interval is narrow, so that charge transfer resistance can be reduced, and the charge acceptance performance is improved. When the concentration of the polymer compound (P) is high, the ratio of the polymer compound (P) covering the surface of the negative active material increases, and the charge acceptance tends to decrease. However, when the content of the polymer compound (P) is 400 ppm or less, it is considered that deterioration of charge acceptance performance is suppressed by setting the pull-out load ratio to 1.5 or more. In addition, by adding the polymer compound (P) to the negative electrode material, a hydrogen overvoltage in the negative electrode plate can be increased, so that the amount of overcharge can be reduced. As a result, the decrease in the electrolyte solution can be suppressed. There is a possibility that the lead-acid battery of the present invention realizes a small amount of overcharge, high charge acceptance performance, and a low permeation short circuit incidence in a well-balanced manner based on the above reasons.

The peak described in the above condition (i) may be derived from the oxy $C_{2-4}$ alkylene unit. The polymer compound (P) contains a repeating structure of monomer units and/or has a certain molecular weight. More specifically, the polymer compound (P) satisfying the condition (i) may have a repeating structure of oxy $C_{2-4}$ alkylene units and/or may have a number average molecular weight (Mn) of 500 or more. Mn of the polymer compound (P) satisfying the above condition (ii) may be 300 or more.

Hereinafter, a value obtained by dividing a pull-out load (kgf) when the element is pulled out from the container by a weight (kgf) of the element may be referred to as a "pull-out load ratio". The pull-out load ratio is expressed by the following formula. The unit of the pull-out load and the weight of the element may be N (Newton).

$$\text{(Pull-out load ratio)} = \text{(Pull-out load when element is pulled out from container)}/\text{(Weight of element)}$$

The value of pull-out load ratio indicates how many times the pull-out load when the element is pulled out from the container is the weight of the element. The larger the pull-out load ratio is, the more the element is compressed in the container. Usually, the larger the pull-out load ratio is, the narrower the distance between adjacent plates is.

The pull-out load when the element is pulled out from the container may be 10 times or less the weight of the element. That is, the pull-out load ratio may be 10.0 or less. When the pull-out load ratio exceeds 10.0, it may be difficult to insert the element into the container, or the separator may be broken.

As described above, the pull-out load ratio is 1.5 or more. The pull-out load ratio may be 1.5 or more, 1.8 or more, 2.0 or more, or 2.5 or more. The pull-out load ratio may be 10.0 or less, 9.0 or less, 6.0 or less, 4.0 or less, 3.0 or less, 2.5 or less, or 2.0 or less. These lower limit values and upper limit values can be combined arbitrarily as long as there is no contradiction. For example, the pull-out load ratio may be in the range of 1.5 to 10.0, in the range of 1.5 to 9.0, in the range of 1.5 to 6.0, in the range of 1.5 to 4.0, or in the range of 1.5 to 3.0. In these ranges, the lower limit may be changed to 1.8, 2.0, or 2.5.

The lead-acid battery may include a container including a plurality of cell chambers and a plurality of elements. One element is usually disposed in each cell chamber. In this case, at least one cell chamber and an element disposed in the cell chamber may satisfy the above conditions. It is preferable that all the cell chambers and the elements disposed in the cell chambers satisfy the above conditions.

The polymer compound (P) preferably contains a repeating structure of oxy $C_{2-4}$ alkylene units. When a polymer compound (P) containing a repeating structure of oxy $C_{2-4}$ alkylene units is used, it is considered it becomes easier to adsorb to lead, and it becomes easy to thinly cover the lead surface by easily taking a linear structure. It is considered that occurrence of permeation short circuit can be suppressed by covering the lead surface with the polymer compound (P). In addition, it is considered that the thin coating with the polymer compound (P) can suppress a significant deterioration in charge acceptance performance. Therefore, in this case, a lead-acid battery having particularly good characteristics is obtained.

The polymer compound (P) may be at least one selected from the group consisting of polyethylene glycol, an esterified product of polyethylene glycol, polypropylene glycol, and an esterified product of polypropylene glycol. For example, the polymer compound (P) may be polypropylene glycol. According to these configurations, a lead-acid battery having particularly good characteristics is obtained.

The number average molecular weight of the polymer compound (P) may be 1,000 or more. According to this configuration, the amount of overcharge can be particularly reduced.

The polymer compound (P) may contain at least one selected from the group consisting of hydroxy compounds containing a repeating structure of oxy $C_{2-4}$ alkylene units, etherified products of the hydroxy compounds, and esterified products of the hydroxy compounds. Here, the hydroxy compound is at least one selected from the group consisting of poly $C_{2-4}$ alkylene glycols, copolymers containing a repeating structure of oxy $C_{2-4}$ alkylene, and $C_{2-4}$ alkylene oxide adducts of a polyol. By using such a polymer compound (P), it is possible to obtain a lead-acid battery having particularly good characteristics.

The repeating structure of oxy $C_{2-4}$ alkylene units may contain at least a repeating structure of oxypropylene units (-O-CH(-CH$_3$)-CH$_2$-). Such a polymer compound (P) easily spreads thinly on a lead surface while having high adsorptivity to lead, and is considered to have an excellent balance therebetween. Therefore, by using such a polymer compound (P), it is possible to obtain a lead-acid battery having particularly good characteristics.

The polymer compound (P) can thinly cover a lead surface while having high adsorptivity to lead. Therefore, even when the content of the polymer compound (P) in the negative electrode material is very small (more specifically, 400 ppm or less), the above-described effect is obtained.

It is sufficient that the polymer compound (P) can be contained in the negative electrode material, and the source of the polymer compound (P) contained in the negative electrode material is not particularly limited. The polymer compound (P) may be contained in any of the components (for example, a negative electrode plate, a positive electrode plate, an electrolyte solution, and a separator) of the lead-acid battery when preparing the lead-acid battery. The polymer compound may be contained in one constituent element, or may be contained in two or more constituent elements (for example, a negative electrode plate and an electrolyte solution).

The pull-out load when the element is pulled out from the container can be changed by, for example, width W of the container (or the cell chamber), thickness of the element, and the like. Alternatively, the pull-out load can be changed by disposing a spacer between an inner wall of the container and an electrode plate at an end of the element as necessary. Here, the width W of the container (or the cell chamber) is a length of a space (a space in which the element is disposed) in the container in a direction in which the positive electrode plate and the negative electrode plate are stacked in the container. The thickness of the element may be changed by changing at least one selected from the group consisting of the amount of the positive electrode material held by the positive electrode plate, the amount of the negative electrode material held by the negative electrode plate, shape of the positive current collector, and shape of the negative current collector. By changing the pull-out load, the pull-out load ratio can be changed. The pull-out load ratio is usually substantially the same or not significantly different before and after formation. Therefore, it is possible to prepare a battery by predicting the pull-out load ratio after formation to some extent.

(Description of terminology)

Terms used herein will be described below.

(Weight of element)

In the specification of the present application, the weight of the element is a weight measured by the following procedure. First, an upper lid of a fully charged lead-acid battery is cut to disassemble the lead-acid battery, and then all the electrolyte solution in the container is removed, and the element is taken out. Next, weight (W1) of the taken-out element is measured by using a scale in a state where the electrolyte solution is soaked in the element (in a state where the plate is wet). In this manner, the weight (W1) of the element is measured. The element for measuring its weight includes a positive electrode plate, a negative electrode plate, and other components (for example, a separator and a strap) of the element.

(Pull-out load of element)

In the specification of the present application, the pull-out load of the element is a load measured by the following procedure. First, the element whose weight has been measured as described above is returned to the container, and the element is pulled out by hooking a part (for example, a strap portion) of the element. At this time, a load when the element is pulled out from the container is measured using a digital force gauge. The maximum value of the measured load is defined as a pull-out load (W2) of the element. The pull-out load ratio (compression force) is obtained by dividing the pull-out load (W2) by the weight (W1) of the element.

(Up-down direction of lead-acid battery or components of lead-acid battery)

In the present specification, the up-down direction of the lead-acid battery or components (such as plate, container, and separator) of the lead-acid battery means the up-down direction (vertical direction) of the lead-acid battery when the lead-acid battery is disposed in a normal use state.

(Negative electrode material)

The negative electrode material is usually held by a current collector (negative current collector). The negative electrode material is a portion excluding the current collector from the negative electrode plate. A member such as a mat or a pasting paper may be stuck to the negative electrode plate. Such a member (also referred to as a sticking member) is used integrally with the negative electrode plate and is thus assumed to be included in the negative electrode plate. When the negative electrode plate includes the sticking member (such as a mat or a pasting paper), the negative electrode material is a portion excluding the current collector and the sticking member.

(Polymer compound)

As described above, the polymer compound (P) satisfies at least one of the following conditions (i) and (ii).

(i) Has a peak in the range of 3.2 ppm or more and 3.8 ppm or less in a chemical shift of $^1$H-NMR spectrum measured using deuterated chloroform as a solvent.
(ii) Contains an oxy $C_{2-4}$ alkylene unit as a repeating structure.

In the condition (i), the peak appearing in the range of 3.2 ppm or more and 3.8 ppm or less is derived from the oxy $C_{2-4}$ alkylene unit. That is, the polymer compound (P) satisfying the condition (ii) is also the polymer compound (P) satisfying the condition (i). The polymer compound (P) satisfying the condition (i) may contain a repeating structure of monomer units other than the oxy $C_{2-4}$ alkylene unit, and may have a certain level of molecular weight. The number average molecular weight (Mn) of the polymer compound (P) satisfying the above condition (i) or (ii) may be, for example, 300 or more.

(Oxy $C_{2-4}$ alkylene unit)

The oxy $C_{2-4}$ alkylene unit is a unit represented by $-Q-R^1-$. Here, $R^1$ represents a $C_{2-4}$ alkylene group (an alkylene group having 2 or more and 4 or less carbon atoms).

(Number average molecular weight)

The number average molecular weight (Mn) is determined by gel permeation chromatography (GPC). A standard substance used for determining Mn is polyethylene glycol.

(Weight average molecular weight)

The weight average molecular weight (Mw) is determined by GPC. A standard substance used for determining the Mw is sodium polystyrene sulfonate.

(Sulfur element content in organic expander)

The sulfur element content in the organic expander being X pmol/g means that the content of the sulfur element contained per 1 g of the organic expander is X pmol.

(Fully charged state)

The fully charged state of the flooded-type lead-acid battery is defined by the definition of JIS D 5301: 2019. More specifically, the following state is defined as the fully charged state: the lead-acid battery is charged in a water bath at 25°C ± 2°C at a current (A) 0.2 times as large as a numerical value (numerical value whose unit is Ah) described as a rated capacity until a terminal voltage (V) during charge measured every fifteen minutes or an electrolyte solution density subjected to temperature correction to 20°C exhibits a constant value at three significant digits continuously three times. In the case of a valve-regulated lead-acid battery, the fully charged state is a state where the lead-acid battery is subjected to constant current constant voltage charge of 2.23 V/cell at the current (A) 0.2 times as large as the numerical value (numerical value whose unit is Ah) described as the rated capacity in an air tank of 25°C ± 2°C, and the charge is completed when the charge current during constant voltage charge becomes a value (A) of 0.005 times as large as the numerical value (numerical value whose unit is Ah) described in the rated capacity.
The lead-acid battery in the fully charged state refers to a battery obtained by fully charging the formed lead-acid battery with electricity. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

Hereinafter, a configuration of a lead-acid battery according to an embodiment of the present invention will be specifically described, but the present invention is not limited to the following configuration.

[Lead-acid battery]

The lead-acid battery may be either a valve-regulated (sealed) lead-acid battery (VRLA type lead-acid battery) or a flooded-type (vented) lead-acid battery. Examples of main components of the lead-acid battery will be described below.

(Negative electrode plate)

The negative electrode plate includes a current collector (negative current collector) and a negative electrode material.

(Current collector)

The negative current collector may be formed by casting lead (Pb) or a lead alloy, or may be formed by processing a lead sheet or a lead alloy sheet. Examples of the processing method include expanding processing or punching processing. Examples of the current collector include a grid-like current collector generally called a grid, a current collector obtained by punching a circle or an ellipse, and a current collector in which a grid is provided radially from a lug part of the current collector. A current collector that is not grid-like may also be called a grid. It is preferable to use the grid-like current collector as the negative current collector because the negative electrode material is easy to be supported.

The lead alloy used for the negative current collector may be any of a Pb-Ca-based alloy and a Pb-Ca-Sn-based alloy. The lead or lead alloys may further contain, as an additive element, at least one selected from the group consisting of Ba, Ag, Al, Bi, As, Se, Cu, and the like.

(Negative electrode material)

The negative electrode material contains the above polymer compound (P). The negative electrode material further contains a negative active material (specifically, lead or lead sulfate) that exhibits a capacity through a redox reaction. The negative electrode material may contain at least one selected from the group consisting of an organic expander, a carbonaceous material, and other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound (P))

Examples of the oxy $C_{2-4}$ alkylene unit contained in the polymer compound (P) include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound (P) may have one kind or two or more kinds of such oxy $C_{2-4}$ alkylene units.

The polymer compound (P) may contain one kind of oxy $C_{2-4}$ alkylene unit, or may contain two or more kinds of oxy $C_{2-4}$ alkylene units. The polymer compound (P) may contain one kind of the repeating structure or two or more kinds of the repeating structures.

Examples of the polymer compound (P) include hydroxy compounds having a repeating structure of oxy $C_{2-4}$ alkylene units (poly $C_{2-4}$ alkylene glycols, copolymers containing a repeating structure of oxy $C_{2-4}$ alkylene, $C_{2-4}$ alkylene oxide adducts of a polyol, and the like), etherified or esterified products of these hydroxy compounds, and the like.

Examples of the copolymer include copolymers containing different oxy $C_{2-4}$ alkylene units, poly $C_{2-4}$ alkylene glycol alkyl ethers, poly $C_{2-4}$ alkylene glycol esters of carboxylic acids, and the like. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane, polyhydroxynorbornane, and the like), and the like are preferable, and among them, aliphatic polyols are preferable. Examples of the aliphatic polyol include aliphatic diols and polyols of triol or higher (for example, glycerin, trimethylolpropane, pentaerythritol, sugar, sugar alcohol, and the like), and the like.

Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar or sugar alcohol include sucrose, erythritol, xylitol, mannitol, sorbitol, and the like. The sugar or sugar alcohol may have either a chain structure or a cyclic structure. In the alkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an -$OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group.). Among terminals of the polymer compound, some terminals may be etherified, or all terminals may be etherified. For example, one terminal of a main chain of the linear polymer compound may be an -OH group, and the other terminal may be an -$OR^2$ group.

The esterified product has an -O-C(=O)-$R^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^3$ is an organic group.). Among terminals of the polymer compound, some terminals may be esterified, or all terminals may be esterified. For example, one terminal of a main chain of the linear polymer compound may be an -OH group, and the other terminal may be an -O-C(=O)-$R^3$ group.

Examples of each of the organic groups $R^2$ and $R^3$ include a hydrocarbon group. The hydrocarbon group may have a substituent (for example, a hydroxy group, an alkoxy group, and/or a carboxy group, and the like). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, an alkynyl group, or the like) as a substituent. The number of carbon atoms of the aliphatic hydrocarbon group as a substituent may be, for example, 1 to 30, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, a naphthyl group, and the like. Examples of the bisaryl group include monovalent groups corresponding to bisarene. Examples of the bisarene include biphenyl and bisarylalkanes (for example, bis $C_{6-10}$ aryl $C_{1-4}$ alkanes (such as 2,2-bisphenylpropane), and the like).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group, cyclooctenyl group, and the like), and the like. The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. Examples of the aliphatic hydrocarbon group include alkyl groups, alkenyl groups, alkynyl groups, dienyl groups, and the like. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, and 3 or more for a dienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-decyl, i-decyl, lauryl, myristyl, cetyl, stearyl, behenyl, and the like.

Specific examples of the alkenyl group include vinyl, 1-propenyl, allyl, palmitoleyl, oleyl, and the like. An alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

When at least one selected from the group consisting of etherified products of hydroxy compounds having a repeating structure of oxy $C_{2-4}$ alkylene units and an esterified products of hydroxy compounds having a repeating structure of oxy $C_{2-4}$ alkylene units are used among the polymer compounds, it is preferable because the effect of the present invention can be further enhanced. Even when these polymer compounds are used, a high liquid decrease suppressing effect can be secured.

The negative electrode material may contain one kind of the polymer compound (P) or two or more kinds of the polymer compounds (P).

From the viewpoint of further enhancing the effect of the present invention, it is preferable that the repeating structure of oxy $C_{2-4}$ alkylene contains at least a repeating structure of oxypropylene units. It is considered that the polymer compound (P) containing a repeating structure of oxypropylene units easily spreads thinly on a lead surface while having high adsorptivity to lead, and is excellent in balance therebetween.

The polymer compound containing the oxypropylene unit has peaks derived from -CH< and -$CH_2$- of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from -$CH_2$-, and the peak in the range of more than 3.42 ppm and 3.8 ppm or less is derived from -CH< and -$CH_2$-.

Examples of such a polymer compound (P) include polypropylene glycol, a copolymer containing a repeating structure of oxypropylene, a propylene oxide adduct of the polyol, etherified or esterified products thereof, and the like. Examples of the copolymer include oxypropylene-oxyalkylene copolymers (provided that the oxyalkylene is a $C_{2-4}$ alkylene other than oxypropylene), polypropylene glycol alkyl ethers, a polypropylene glycol ester of a carboxylic acid, and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be a block copolymer.

In the polymer compound (P) containing a repeating structure of oxypropylene units, the proportion of the oxypropylene units in the total monomer units is, for example, 5 mol% or more, and may be 10 mol% or more, 20 mol% or more, 40 mol% or more, 50 mol% or more, 60 mol% or more, or 70 mol% or more.

It is preferable that the polymer compound contains a large amount of oxy $C_{2-4}$ alkylene units from the viewpoint of enhancing adsorptivity to lead and easily taking a linear structure. Such a polymer compound includes, for example, an oxygen atom bonded to a terminal group and a -$CH_2$- group and/or a -CH< group bonded to the oxygen atom. In the $^1$H-NMR spectrum of the polymer compound (P), a ratio of an integrated value $V_1$ of the peak of 3.2 ppm to 3.8 ppm to a sum $V_{SUM}$ of integrated values of predetermined peaks is large. Here, the sum $V_{SUM}$ of the integrated values of the peaks is the sum of the integrated value $V_1$ of the peak, an integrated value of the peak of a hydrogen atom of the -$CH_2$- group, and an integrated value of the peak of a hydrogen atom of the -CH< group. This ratio is, for example, 50% or more, and may be 80% or more. From the viewpoint of further enhancing the effect of the present invention, the above ratio is preferably 85% or more, and more preferably 90% or more. Such polymer compounds (P) contain many oxy $C_{2-4}$ alkylene units in the molecule. Therefore, it is considered that it becomes easy to adsorb to lead, and it becomes easy to thinly cover the lead surface by easily taking a linear structure.

When the polymer compound (P) has an -OH group at a terminal and also has a -$CH_2$- group or a -CH< group bonded to an oxygen atom of the -OH group, in the $^1$H-NMR spectrum, the peaks of the hydrogen atoms of the -$CH_2$- group and the -CH< group have a chemical shift in the range of more than 3.8 ppm and 4.0 ppm or less.

The polymer compound (P) may contain a compound having Mn of 500 or more, a compound having Mn of 600 or more, or a compound having Mn of 1,000 or more. Mn of such a polymer compound (P) is, for example, 20,000 or less, and may be 15,000 or less or 10,000 or less. From the viewpoint of easily retaining in the negative electrode material and easily spreading more thinly on the lead surface, the Mn of the polymer compound (P) is preferably 5,000 or less and may be 4,000 or less or 3,000 or less.

From the viewpoint of easily retaining the compound in the negative electrode material and easily spreading the compound more thinly on the lead surface, the polymer compound (P) preferably contains a polymer compound having at least Mn of 1,000 or more. The Mn of the polymer compound (P) is preferably 1,000 or more and 5,000 or less, and may be 1,000 or more and 4,000 or less, or may be 1,000 or more and 3,000 or less. The polymer compound (P) having such Mn easily moves into the negative electrode material even when it is contained in the electrolyte solution. Therefore, it is possible to replenish the negative electrode material with the polymer compound (P) from the electrolyte solution, and it is easy to retain the polymer compound (P) in the negative electrode material. As the polymer compound (P), two or more kinds of the polymer compounds having different Mn may be used. That is, the polymer compound (P) may have a plurality of peaks of Mn in the distribution of the molecular weight.

As described above, the content of the polymer compound (P) in the negative electrode material is 15 ppm or more and 400 ppm or less on a mass basis. The content may be 15 ppm or more (or 50 ppm or more) and 300 ppm or less, 15 ppm or more (or 50 ppm or more) and 200 ppm or less, or 50 ppm or more (or 200 ppm or more) and 400 ppm or less.

(Organic expander)

The negative electrode material may contain an organic expander. As the organic expander, a known organic expander used in a lead-acid battery may be used. As the organic expander, at least one selected from the group consisting of lignin compounds and synthetic organic expanders may be used. Examples of the lignin compounds include lignin, lignin derivatives, and the like. Examples of the lignin derivative include lignin sulfonic acid or salts thereof (such as alkali metal salts (sodium salts and the like)), and the like. The organic expanders are generally roughly classified into lignin compounds and synthetic organic expanders. It can also be said that the synthetic organic expander is an organic expander other than lignin compounds. The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt. The negative electrode material may contain one kind or two or more kinds of organic expanders.

As the synthetic organic expander, a condensate containing at least a unit of an aromatic compound may be used. Examples of such a condensate include a condensate of an aromatic compound with an aldehyde compound (such as at least one selected from the group consisting of aldehydes (for example, formaldehyde) and condensates thereof). The organic expander may contain a unit of one kind of an aromatic compound or a unit of two or more kinds of aromatic compounds. Note that the unit of an aromatic compound refers to a unit derived from an aromatic compound incorporated in a condensate. As the aromatic compound, bisphenol A, bisphenol S, bisphenol F, and the like are preferable.

The content of the organic expander contained in the negative electrode material is, for example, 0.01% by mass or more and may be 0.05% by mass or more. The content of the organic expander is, for example, 1.0 mass% or less and may be 0.5 mass% or less.

The content of the organic expander contained in the negative electrode material may be 0.01% by mass or more and 1.0% by mass or less, 0.05% by mass or more and 1.0% by mass or less, 0.01% by mass or more and 0.5% by mass or less, or 0.05% by mass or more and 0.5% by mass or less.

(Carbonaceous material)

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphite-type crystal structure and may be either artificial graphite or natural graphite. The negative electrode material may contain one kind or two or more kinds of carbonaceous materials.

The content of the carbonaceous material in the negative electrode material is, for example, 0.05% by mass or more and may be 0.10% by mass or more. The content of the carbonaceous material is, for example, 5% by mass or less and may be 3% by mass or less.

The content of the carbonaceous material in the negative electrode material may be 0.05% by mass or more and 5% by mass or less, 0.05% by mass or more and 3% by mass or less, 0.10% by mass or more and 5% by mass or less, or 0.10% by mass or more and 3% by mass or less.

(Barium sulfate)

The content of barium sulfate in the negative electrode material is, for example, 0.05% by mass or more and may be 0.10% by mass or more. The content of barium sulfate in the negative electrode material is, for example, 3% by mass or less and may be 2% by mass or less.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

(Analysis of constituent components of negative electrode material)

Hereinafter, a method of analyzing the negative electrode material or constituent components thereof will be described. Prior to analysis, a lead-acid battery in a fully charged state is disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. When the negative electrode plate includes a sticking member, the sticking member is removed as necessary. Next, the negative electrode material is separated from the negative electrode plate and pulverized to obtain a sample (hereinafter referred to as sample A).

(1) Analysis of polymer compound

(1-1) Qualitative analysis of polymer compound

150.0 $\pm$ 0.1 mL of chloroform is added to 100.0 $\pm$ 0.1 g of the sample A, and the mixture is stirred at 20 $\pm$ 5°C for 16 hours to extract the polymer compound. Thereafter, the solid content is removed by filtration. For a chloroform solution in which the polymer compound obtained by the extraction is dissolved or the polymer compound obtained by drying the chloroform solution, information is obtained from at least one selected from an infrared spectroscopic spectrum, an ultraviolet-visible absorption spectrum, an NMR spectrum, and LC-MS and pyrolysis GC-MS to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.

Observation frequency: 395.88 MHz
Pulse width: 6.30 $\mu$s
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the -$CH_2$- group and the -CH< group bonded to the oxygen atom bonded to the terminal group of the polymer compound, the sum ($V_2$) of integrated values of peaks in the $^1$H-NMR spectrum is determined. Then, from $V_1$ and $V_2$, a ratio of $V_1$ to the sum of $V_1$ and $V_2$ (= 100 $\times$ $V_1$/($V_1$ + $V_2$), unit: %) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in the range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(1-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. That is, the $^1$H-NMR spectrum is measured using deuterated chloroform as a solvent. Next, an integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1{,}000{,}000$$

(wherein $M_a$ is a molecular weight of a structure showing a peak in the chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.)

Since the reference substance in this analysis is TCE, $N_r$ = 2 and $M_r$ = 168. In addition, m = 100.

For example, when the polymer compound (P) is polypropylene glycol, $M_a$ is 58, and $N_a$ is 3. When the polymer compound (P) is polyethylene glycol, $M_a$ is 44, and $N_a$ is 4. $N_a$ and $M_a$ are values obtained by averaging $N_a$ values and $M_a$ values of each monomer unit using a molar ratio (mol%) of each monomer unit contained in the repeating structure.

In the quantitative analysis, the integrated value of the peak in the $^1$H-NMR spectrum is determined using data processing software "ALICE" manufactured by JEOL Ltd.

(1-3) Mn Measurement of polymer compound

GPC measurement of the polymer compound extracted from the sample A by the method described in (1-1) above is performed under the following conditions using the following apparatuses. Separately, a calibration curve (standard curve) is prepared from a plot of Mn of the standard substance and elution time. The Mn (number average molecular weight) of the polymer compound is calculated based on the standard curve and the GPC measurement result of the polymer compound.

> Analysis system: 20A system (manufactured by Shimadzu Corporation)
> Column: two columns of GPC KF-805L (manufactured by Shodex) connected in series
> Column temperature: 30°C
> Mobile phase: tetrahydrofuran
> Flow rate: 1 mL/min.
> Concentration: 0.20% by mass
> Injection amount: 10 μL
> Standard substance: polyethylene glycol (Mn = 200,0000, 20,0000, 20,000, 2,000, 200)
> Detector: differential refractive index detector (Shodex RI-201H, manufactured by Shodex)

(2) Analysis of organic expander

(2-1) Qualitative analysis of organic expander in negative electrode material

The sample A is immersed in a 1 mol/L sodium hydroxide aqueous solution to extract the organic expander. Next, the first organic expander and the second organic expander are separated from the extract as necessary. For each separated material containing each organic expander, insoluble components are removed by filtration, and the obtained solution is desalted, then concentrated, and dried. The desalination is performed by using a desalination column, by causing the solution to pass through an ionexchange membrane, or by placing the solution in a dialysis tube and immersing the solution in distilled water. The solution is dried to obtain a powder sample (hereinafter, referred to as a sample B) of the organic expander.

A type of the organic expander is specified using a combination of information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, an NMR spectrum of a solution obtained by dissolving the sample B in a predetermined solvent such as heavy water, pyrolysis GC-MS capable of obtaining information on individual compounds constituting a substance, or the like.

The first organic expander and the second organic expander are separated from the extract as follows. First, the extract is measured by infrared spectroscopy, NMR, and/or GC-MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight. When it is difficult to separate the organic expander due to the difference in molecular weight, one of the organic expanders is separated by a precipitation separation method using a difference in solubility that varies depending on the type of the functional group and/or the amount of the functional group of the organic expander. Specifically, an aqueous sulfuric acid solution is added dropwise to a mixture obtained by dissolving the extract in an NaOH aqueous solution to adjust the pH of the mixture, thereby aggregating and separating one of the organic expanders. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

(2-2) Quantitative determination of content of organic expander in negative electrode material

Similarly to (2-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a standard curve prepared in advance.

When a lead-acid battery in which the content of the organic expander is unknown is obtained and the content of the organic expander is measured, a structural formula of the organic expander cannot be strictly specified, so that the same organic expander may not be used for the standard curve. In this case, the content of the organic expander is measured using the ultraviolet-visible absorption spectrum by creating a standard curve using a separately available organic polymer in which the ultraviolet-visible absorption spectrum, the infrared spectroscopic spectrum, the NMR spectrum, and the like exhibit similar shapes with respect to the organic expander extracted from the negative electrode of the battery.

(2-3) Content of sulfur element in organic expander

Similarly to (2-1) above, after the sample B of the organic expander is obtained, sulfur element in 0.1 g of the organic expander is converted into sulfuric acid by an oxygen combustion flask method. At this time, the sample B is burned in a flask containing an adsorbent to obtain an eluate in which sulfate ions are dissolved in the adsorbent. Next, the eluate is titrated with barium perchlorate using thorin as an indicator to determine the content (c1) of the sulfur element in 0.1 g of the organic expander. Next, c1 is multiplied by 10 to calculate the content ($\mu$mol/g) of the sulfur element in the organic expander per 1 g.

(2-4) Mw Measurement of organic expander

Similarly to (2-1) above, after obtaining the sample B of an organic expander, GPC measurement of the organic expander is performed under the following conditions using the following apparatus. Separately, a calibration curve (standard curve) is prepared from a plot of Mw of the standard substance and elution time. The Mw of the organic expander is calculated based on the standard curve and the GPC measurement result of the organic expander.

GPC apparatus: Build-up GPC system SD-8022/DP-8020/AS-8020/CO-8020/UV-8020 (manufactured by Tosoh Corporation)
Column: TSKgel G4000SWXL, G2000SWXL (7.8 mm I.D. x 30 cm) (manufactured by Tosoh Corporation)
Detector: UV detector, $\lambda$ = 210 nm
Eluent: Mixed solution of NaCl aqueous solution having a concentration of 1 mol/L: acetonitrile (volume ratio = 7:3)
Flow rate: 1 mL/min.
Concentration: 10 mg/mL
Injection amount: 10 pL
Standard substance: Na polystyrene sulfonate (Mw = 275,000, 35,000, 12,500, 7,500, 5,200, 1,680)

(3) Quantitative determination of carbonaceous material and barium sulfate

To 10 g of the sample A, 50 ml of nitric acid having a concentration of 20% by mass is added and heated for about 20 minutes to dissolve the lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C $\pm$ 5°C. The filtered sample is a mixed sample of the carbonaceous material and barium sulfate. A mass ($M_m$) of the sample C is measured by subtracting the mass of the membrane filter from the total mass of dried mixed sample (hereinafter, referred to as sample C) and the membrane filter. Thereafter, the sample C is placed in a crucible together with a membrane filter and is burned and incinerated at 1300°C or higher. The residue remaining is barium oxide. The mass ($M_B$) of barium sulfate is determined by converting the mass of barium oxide to the mass of barium sulfate. The mass of the carbonaceous material is calculated by subtracting the mass $M_B$ from the mass $M_m$.

(Others)

The negative electrode plate can be formed in such a manner that a negative current collector is coated or filled with a negative electrode paste, which is then cured and dried to fabricate a non-formed negative electrode plate, and thereafter, the non-formed negative electrode plate is formed. The negative electrode paste is prepared, for example, by adding water and sulfuric acid (or sulfuric acid aqueous solution) to a lead powder, the polymer compound, and if necessary, at least one selected from the group consisting of an organic expander, a carbonaceous material, and other additives, and mixing the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. The paste-type positive electrode plate includes a positive current collector and a positive electrode material. The positive electrode material is held by the positive current collector. In the paste-type positive electrode plate, the positive electrode material is a portion excluding the positive current collector from the positive electrode plate. The positive current collector may be formed by casting lead (Pb) or a lead alloy, or may be formed by processing a lead sheet or a lead alloy sheet. Examples of the processing method include expanding processing and punching processing. It is preferable to use a grid-like current collector as the positive current collector because the positive electrode material is easily supported. The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a portion excluding the tube, the spine, the current collector, and the joint. In the clad-type positive electrode plate, the spine and the current collector may be collectively referred to as a positive current collector.

A member such as a mat or a pasting paper may be stuck to the positive electrode plate. Such a member (sticking member) is used integrally with the positive electrode plate and is thus assumed to be included in the positive electrode plate. When the positive electrode plate includes a sticking member (a mat, a pasting paper, etc.), the positive electrode material is a portion excluding the positive current collector and the sticking member from the positive electrode plate in the paste-type positive electrode plate.

As a lead alloy used for the positive current collector, a Pb-Sb-based alloy, a Pb-Ca-based alloy, or a Pb-Ca-Sn-based alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector.

The positive electrode material contained in the positive electrode plate contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste. The positive electrode paste is prepared by kneading lead powder, an additive, water, and sulfuric acid. A non-formed clad-type positive electrode plate is formed by filling a porous tube, into which a spine connected by a current collecting portion is inserted, with lead powder or a slurry-like lead powder, and joining a plurality of tubes with a joint. Thereafter, the positive electrode plate is obtained by forming the non-formed positive electrode plates. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Separator)

The separator can be disposed between the negative electrode plate and the positive electrode plate. As the separator, at least one selected from a nonwoven fabric and a microporous membrane, and the like are used.

The nonwoven fabric is a mat in which fibers are intertwined without being woven and is mainly made of fibers.

In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components in addition to the fibers, such as acid-resistant inorganic powder, a polymer as a binder, and the like.

On the other hand, the microporous film is a porous sheet mainly made of components except for fiber components and is obtained by, for example, extrusion molding a composition containing, for example, a pore-forming additive into a sheet shape and then removing the pore-forming additive to form pores. The microporous film is preferably made of a material having acid resistance and is preferably composed mainly of a polymer component. As the polymer material, a polyolefin (polyethylene, polypropylene, etc.). is preferred. Examples of the pore-forming additive include at least one selected from the group consisting of a polymer powder and oil.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lug parts are usually formed on the upper portion of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

(Electrolyte solution)

The electrolyte solution is an aqueous solution containing sulfuric acid and may be gelled as necessary. The polymer compound (P) may be contained in the electrolyte solution.

The electrolyte solution may contain cations (for example, metal cations) and/or anions (for example, anions other than sulfate anions (such as phosphate ions)) if necessary. Examples of the metal cation include at least one selected from the group consisting of a Na ion, a Li ion, a Mg ion, and an Al ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution at 20°C may be 1.20 or more and 1.35 or less, 1.20 or more and 1.32 or less, 1.25 or more and 1.35 or less, or 1.25 or more and 1.32 or less.

(Others)

The lead-acid battery can be obtained by a manufacturing method including a step of storing an element and an electrolyte solution in a cell chamber of a container. Each cell of the lead-acid battery includes an element and an electrolyte solution stored in each cell chamber. The element is assembled by stacking a positive electrode plate, a negative electrode plate, and a separator such that the separator is interposed between the positive electrode plate and the negative electrode plate prior to storage in the cell chamber. The positive electrode plate, the negative electrode plate, the electrolyte solution, and the separator are each prepared prior to assembly of the element. A method of manufacturing the lead-acid battery may include a step of forming at least one of the positive electrode plate and the negative electrode plate as necessary after a step of storing the element and the electrolyte solution in the cell chamber.

The number of plates in the element may be one or two or more. From the viewpoint of securing a higher capacity, the number of negative electrode plates included in the element is preferably two or more, and may be four or more or six or more. When the number of negative electrode plates included in the element is n, the number of positive electrode plates is (n - 1) or more and (n + 1) or less when n $\geq$ 2, and is 1 or 2 when n = 1.

When the lead-acid battery has two or more cells, at least one cell satisfies the above condition, and preferably all cells satisfy the above condition.

When a separator and a mat are used in combination for the element, and when a mat mainly composed of a nonwoven fabric is attached to the plate, the thickness of the plate is a thickness including the mat. This is because the mat is used integrally with the plate. However, when the mat is attached to the separator, a thickness of the mat is included in a thickness of the separator.

Fig. 1 shows an appearance of an example of a lead-acid battery according to an embodiment of the present invention. A lead-acid battery 1 includes a container 12 that houses an element 11 and an electrolyte solution (not shown). An inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and a plurality of positive electrode plates 3 with a separator 4 interposed therebetween. At this point, the bag-shaped separator 4 accommodating the negative electrode plate 2 is illustrated, but the form of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each penetrating connection body 8 passes through a through-hole made in the partition 13 to connect the elements 11 of the adjacent cell chambers 14 in series.

The positive electrode shelf portion 5 is formed by welding the lug parts, provided on the upper portions of the respective positive electrode plates 3, to each other by a cast-on-strap method or a burning method. The negative electrode shelf 6 is also formed by welding the lug parts, provided on the upper parts of the respective negative electrode plates 2, to each other in accordance with the case of the positive electrode shelf 5.

The lid 15 of the lead-acid battery has a single structure (single lid), but is not limited to the illustrated examples. The lid 15 may have, for example, a double structure including an inner lid and an outer lid (or an upper lid). The lid having the double structure may have a reflux structure between the inner lid and the outer lid for returning the electrolyte solution into the battery (inside the inner lid) through a reflux port provided in the inner lid.

The lead-acid battery according to one aspect of the present invention will be described below.

(1) A lead-acid battery including:

an element;
an electrolyte solution; and
a container that houses the element and the electrolyte solution, in which
the element includes a plurality of stacked positive electrode plates and a plurality of stacked negative electrode plates,
the negative electrode plate contains a negative electrode material,
the negative electrode material contains a polymer compound,
the polymer compound has a peak in the range of 3.2 ppm or more and 3.8 ppm or less in a chemical shift of a $^1$H-NMR spectrum measured using deuterated chloroform as a solvent,
a content of the polymer compound in the negative electrode material is 15 ppm or more and 400 ppm or less on a mass basis, and
a pull-out load when the element is pulled out from the container is 1.5 times or more a weight of the element.

(2) A lead-acid battery including:

an element;

an electrolyte solution; and

a container that houses the element and the electrolyte solution, in which

the element includes a plurality of stacked positive electrode plates and a plurality of stacked negative electrode plates,

the negative electrode plate contains a negative electrode material,

the negative electrode material contains a polymer compound,

the polymer compound contains an oxy $C_{2-4}$ alkylene unit as a repeating structure,

a content of the polymer compound in the negative electrode material is 15 ppm or more and 400 ppm or less on a mass basis, and

a pull-out load when the element is pulled out from the container is 1.5 times or more a weight of the element.

(3) In (2) above, the polymer compound may contain at least one selected from the group consisting of hydroxy compound containing the repeating structure of oxy $C_{2-4}$ alkylene units, etherified product of the hydroxy compound, and esterified product of the hydroxy compound.

(4) In (1) or (2) above, the polymer compound may be at least one selected from the group consisting of polyethylene glycol, an esterified product of polyethylene glycol, polypropylene glycol, and an esterified product of polypropylene glycol.

(5) In (4) above, the polymer compound may be polypropylene glycol.

(6) In any one of (1) to (5) above, a number average molecular weight of the polymer compound may be 1,000 or more.

(7) In any one of (1) to (6) above, the pull-out load when the element is pulled out from the container may be 10.0 times or less the weight of the element.

A lead-acid battery (X) as another example disclosed in this specification includes an element, an electrolyte solution, and a container that houses the element and the electrolyte solution, the element includes a plurality of stacked positive electrode plates and a plurality of stacked negative electrode plates, and a pull-out load when the element is pulled out from the container is 1.5 times or more a weight of the element. The lead-acid battery (X) may or may not contain the polymer compound (P). For example, in the lead-acid battery (X), a content of the polymer compound (P) in the negative electrode material may be less than 15 ppm (for example, more than 0 ppm and less than 15 ppm) on a mass basis. The portion other than the polymer compound (P) can have the same configuration as that of the above-described lead-acid battery containing the polymer compound (P). According to the lead-acid battery (X), as shown in examples, high charge acceptance performance can be realized.

EXAMPLES

Hereinafter, the present invention is specifically described on the basis of examples and comparative examples, but the present invention is not limited to the following examples.

[Measurement and evaluation of amount of overcharge]

In examples, the amount of overcharge is measured and evaluated by the following method. First, the lead-acid battery to be measured is subjected to a high temperature light load test of 1,220 cycles at 75°C $\pm$ 3°C in order to set a more overcharged condition than the normal 4-10 min test specified in JIS D 5301. The high temperature load test is performed in a state where a lead-acid battery is disposed in a water bath at 75°C. The one cycle of the high temperature light load test consists of 1 minute discharge and 10 minutes charge. Discharge is performed at a current of 25 A. Charge is performed at a voltage of 2.47 V/cell and a current of 25 A. Then, the amount of overcharge (amount of charge - discharge capacity) in each cycle of 1 to 1,220 cycles is summed to obtain a total value. Next, the total value is divided by the number of cycles to obtain the amount of overcharge (Ah) per cycle. As the amount of overcharge is smaller, the characteristics of the battery are better, and the decrease in the electrolyte solution is smaller. The amount of overcharge of each battery is evaluated from a relative value (ratio) of the amount of overcharge (Ah) of each battery when the amount of overcharge (Ah) per cycle of the battery A1 is 100. The lower the relative value, the better the characteristics.

[Evaluation of charge acceptance]

In examples, charge acceptance performance is measured and evaluated by the following method. First, the lead-acid battery to be measured is charged according to the method described for "fully charged state" to be brought into a fully charged state. Next, the battery is discharged at 6.4 A for 30 minutes, then left for 16 hours, and further charged at a constant voltage of 2.42 V/cell. The upper limit of the current during charge is set to 200 A. Then, an integrated amount of charge (Ah) for 10 seconds from charge start is measured. These operations are performed in a state where the battery is disposed in a water bath at 25°C $\pm$ 2°C. The larger the integrated amount of charge, the higher the charge acceptance performance (the better the characteristics of the battery). The charge acceptance performance of each battery is evaluated from a relative value (ratio) of the integrated amount of charge (Ah) of each battery when the integrated amount of charge (Ah) of the battery A1 is 100. The higher the relative value, the better the characteristics.

[Evaluation of permeation short circuit incidence]

In examples, the permeation short circuit incidence is evaluated by the following method. The "permeation short circuit" means a short circuit that occurs when a dendrite or the like grown from an electrode penetrates a separator and reaches an adjacent electrode. In the evaluation of the permeation short circuit incidence, first, twenty lead-acid batteries to be evaluated were prepared. Then, these lead-acid batteries are disposed in a thermostatic water bath at 25°C, and a charge-discharge cycle including the following Steps 1 to 4 is repeated 5 times. This test is performed under conditions that promote occurrence of permeation short circuit. Therefore, the permeation short circuit incidence in this test is significantly higher than the permeation short circuit incidence under actual use conditions of the lead-acid battery.

Step 1: The lead-acid battery is discharged at a constant current of 0.05 C (A) until the voltage of the lead-acid battery reaches 1.0 V/cell. Here, C is a numerical value when the rated capacity is expressed in units of "Ah (ampere-hour)".
Step 2: A resistance of 10 $\Omega$ is connected to the lead-acid battery subjected to Step 1, and the lead-acid battery is discharged for 28 days.
Step 3: The lead-acid battery subjected to Step 2 is charged at a constant voltage of 2.4 V/cell for 10 minutes. At this time, the charge current is set to 50 A at maximum.
Step 4: The lead-acid battery is charged at a constant current of 0.05 C (A) for 27 hours.

Next, the batteries of the twenty lead-acid batteries subjected to the charge-discharge cycle were disassembled to visually confirm the presence or absence of a short circuit. From this test, the short circuit incidence (permeation short circuit) is determined.

(Example 1)

In Example 1, a plurality of types of lead-acid batteries are prepared by changing the content of the polymer compound (P) in the negative electrode material and the pull-out load of the element. The positive electrode plates and the negative electrode plates of these lead-acid batteries are prepared as follows.

(a) Preparation of negative electrode plate

Lead powder as raw material, barium sulfate, carbon black, the polymer compound (P) (polypropylene glycol, Mn = 2,000), and an organic expander (sodium lignin sulfonate) are mixed with an appropriate amount of a sulfuric acid aqueous solution to obtain a negative electrode paste. At this time, the respective components are mixed so that the content (ppm: mass ratio) of polypropylene glycol (PPG) in the negative electrode material, which is obtained by the procedure described above, is the amount shown in Table 1. Also, the respective components are mixed so that the content of barium sulfate is 0.4% by mass, the content of carbon black is 0.2% by mass, and the content of the organic expander is 0.1% by mass in the negative electrode material. A mesh portion of an expanded grid made of a Pb-Ca-Sn alloy is filled with the negative electrode paste, which is then cured and dried to obtain a non-formed negative electrode plate.

(b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

(c) Preparation of test battery

A test battery has a rated voltage of 2 V and a 20-hour rated capacity of 60 Ah. An element of the test battery includes seven positive electrode plates and eight negative electrode plates. The positive electrode plate is housed in a bag-shaped separator formed of a polyethylene microporous film, and alternately stacked with the negative electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution after formation is 1.28 (in terms of 20°C).

In the preparation of the test battery, a spacer is disposed between an inner wall of the container and an electrode plate at an end of the element as necessary. At this time, the thickness of the spacer is adjusted such that a pull-out load (pull-out load of the element) changes. The thicknesses of the negative electrode plate and the positive electrode plate are 1.5 mm and 1.8 mm, respectively, and the maximum thickness T of the separator is 0.8 mm.

In the $^1$H-NMR spectrum of the polymer compound measured by the procedure described above, a peak derived from -$CH_2$- of the oxypropylene unit is observed in a chemical shift range of 3.2 ppm or more and 3.42 ppm or less, and a peak derived from -CH< and -$CH_2$- of the oxypropylene unit is observed in a chemical shift range of more than 3.42 ppm and 3.8 ppm or less. In addition, in the $^1$H-NMR spectrum, a ratio of an integrated value $V_1$ of the peak of 3.2 ppm to 3.8 ppm to a sum $V_{SUM}$ of integrated values of predetermined peaks is 98.1%. Here, the sum $V_{SUM}$ of the integrated values is the sum of the integrated value $V_1$, an integrated value of the peak of a hydrogen atom of the -$CH_2$- group bonded to an oxygen atom, and an integrated value of the peak of a hydrogen atom of the -CH< group bonded to the oxygen atom.

For the lead-acid battery prepared as described above, the amount of overcharge, charge acceptance performance, the permeation short circuit incidence, and the pull-out load ratio are evaluated by the methods described above. A part of the preparation conditions of the prepared lead-acid battery and the evaluation results are shown in Tables 1 and 2.

[Table 1]

| Battery No. | Pull-out load ratio (*1) | PPG Content (ppm) | (c) Amount of overcharge | | (b) Charge acceptance performance | | Permeation short circuit | |
|---|---|---|---|---|---|---|---|---|
| | | | Relative value (*2) | Evaluation (*3) | Relative value (*2) | Evaluation (*4) | Incidence (%) | Evaluation (*5) |
| A1 | 1.0 | | 100 | Reference | 100 | Reference | 0 | Reference |
| A2 | 1.4 | | 103 | C | 101 | B | 50 | C |
| A3 | 1.8 | | 108 | C | 109 | A | 80 | C |
| A4 | 2.2 | 0 | 111 | C | 117 | A | 100 | C |
| A5 | 2.6 | | 113 | C | 126 | A | 100 | C |
| A6 | 3.0 | | 114 | C | 131 | A | 100 | C |
| A7 | 3.5 | | 116 | C | 137 | A | 100 | C |
| A8 | 1.0 | 200 | 89 | A | 82 | C | 0 | A |
| A9 | | 15 | 94 | A | 97 | C | 50 | C |
| A10 | | 50 | 91 | A | 89 | C | 40 | C |
| A11 | 1.4 | 200 | 87 | A | 84 | C | 30 | C |
| A12 | | 400 | 84 | A | 74 | C | 10 | A |
| A13 | | 500 | 79 | A | 69 | C | 0 | A |
| A14 | | 15 | 92 | A | 107 | A | 10 | A |
| A15 | | 50 | 90 | A | 110 | A | 0 | A |
| A16 | 1.5 | 200 | 85 | A | 112 | A | 0 | A |
| A17 | | 400 | 80 | A | 105 | A | 0 | A |
| A18 | | 500 | 74 | A | 82 | C | 0 | A |

(continued)

| Battery No. | Pull-out load ratio (*1) | PPG Content (ppm) | (c) Amount of overcharge | | (b) Charge acceptance performance | | Permeation short circuit | |
|---|---|---|---|---|---|---|---|---|
| | | | Relative value (*2) | Evaluation (*3) | Relative value (*2) | Evaluation (*4) | Incidence (%) | Evaluation (*5) |
| A19 | | 15 | 92 | A | 109 | A | 10 | A |
| A20 | | 50 | 88 | A | 111 | A | 0 | A |
| A21 | 1.8 | 200 | 83 | A | 114 | A | 0 | A |
| A22 | | 400 | 78 | A | 106 | A | 0 | A |
| A23 | | 500 | 70 | A | 91 | C | 0 | A |
| A24 | | 15 | 89 | A | 120 | A | 10 | A |
| A25 | | 50 | 83 | A | 121 | A | 0 | A |
| A26 | 3.0 | 200 | 75 | A | 122 | A | 0 | A |
| A27 | | 400 | 64 | A | 114 | A | 0 | A |
| A28 | | 500 | 61 | A | 97 | C | 0 | A |

[Table 2]

| Battery No. | Pull-out load ratio (*1) | PPG Content (ppm) | (c) Amount of overcharge | | (b) Charge acceptance performance | | Permeation short circuit | |
|---|---|---|---|---|---|---|---|---|
| | | | Relative value (*2) | Evaluation (*3) | Relative value (*2) | Evaluation (*4) | Incidence (%) | Evaluation (*5) |
| A29 | | 15 | 86 | A | 126 | A | 10 | A |
| A30 | | 50 | 81 | A | 128 | A | 10 | A |
| A31 | 6.0 | 200 | 73 | A | 129 | A | 0 | A |
| A32 | | 400 | 61 | A | 117 | A | 0 | A |
| A33 | | 500 | 59 | A | 98 | C | 0 | A |
| A34 | | 15 | 80 | A | 131 | A | 10 | A |
| A35 | | 50 | 76 | A | 135 | A | 10 | A |
| A36 | 9.0 | 200 | 66 | A | 137 | A | 10 | A |
| A37 | | 400 | 57 | A | 115 | A | 0 | A |
| A38 | | 500 | 53 | A | 95 | C | 0 | A |

Notes in Tables 1 and 2 indicate the following, respectively.

(*1) (Pull-out load ratio) = (Pull-out load of element)/(Weight of element)

(*2) The relative value is a ratio when the measured value of the lead-acid battery A1 is 100.

(*3) A battery having a relative value of 95 or less is defined as A (good), a battery having a relative value of more than 95 and 100 or less is defined as B (acceptable), and a battery having a relative value of more than 100 is defined as C (unacceptable).

(*4) A battery having a relative value of 105 or more is defined as A (good), a battery having a relative value of 100 or more and less than 105 is defined as B (acceptable), and a battery having a relative value of less than 100 is defined as C (unacceptable).

(*5) A lead-acid battery having a permeation short circuit incidence of 10% or less is defined as A (good), and a battery having an incidence exceeding 10% is defined as C (unacceptable).

As shown in Tables 1 and 2, a lead-acid battery having a pull-out load ratio of 1.5 or more and a polymer (P) content of 15 ppm or more and 400 ppm or less has a small amount of overcharge, high charge acceptance performance, and a small permeation short circuit incidence. That is, the lead-acid battery can achieve a small amount of overcharge, high charge acceptance performance, and a low permeation short circuit incidence in a well-balanced manner.

In a case where the PPG content is 0 ppm, when the pull-out load increases, the charge acceptance performance is improved, but the amount of overcharge increases. When the amount of overcharge increases, gas generation during overcharge increases, and the decrease in the electrolyte solution increases. In addition, when the PPG content is 0 ppm, when the pull-out load increases, the permeation short circuit incidence greatly increases.

When the pull-out load ratio is 1.4 or less, the charge acceptance performance is significantly deteriorated as the content of the polymer compound (P) increases. On the other hand, when the pull-out load ratio is 1.5 or more, in the case where the content of the polymer compound (P) is in the range of 15 ppm to 400 ppm, the charge acceptance performance is not significantly deteriorated even if the content of the polymer compound (P) increases. When the content of the polymer compound (P) is 500 ppm, the deterioration in charge acceptance performance becomes large.

When the pull-out load ratio is 1.5 or more, in the case where the content of the polymer compound (P) is in the range of 50 ppm to 200 ppm, the charge acceptance performance is improved as compared with the case where the content is 15 ppm.

The reason why the characteristics of the lead-acid battery having a pull-out load ratio of 1.5 or more and the content of the polymer compound (P) of 15 ppm or more and 400 ppm or less are high is not clear at present. However, the following presumption is possible.

(One presumption of reason for obtaining effect)

It is considered that the polymer compound (P) thinly covers the surface of the negative active material. Therefore, it is considered that the polymer compound (P) suppresses growth of dendrite due to precipitation of lead ions dissolved from the negative active material on the negative active material. When the pull-out load ratio is high, the plate interval is narrowed, and in general, a permeation short circuit is likely to occur. However, when the negative electrode material contains an appropriate amount of the polymer compound (P), the growth of dendrite is suppressed, so that a permeation short circuit can be suppressed even if the plate interval is narrow. Also, when the pull-out load is high, it is considered that movement of the polymer compound (P) is suppressed and the polymer compound (P) tends to stay in the negative electrode plate. As a result, the higher the pull-out load is, the higher the short-circuit suppression effect of the polymer compound (P) may be. In addition, when the pull-out load ratio is high, the plate interval is narrow, so that charge transfer resistance can be reduced, and the charge acceptance performance is improved. When the concentration of the polymer compound (P) is high, the ratio of the polymer compound (P) covering the surface of the negative active material increases, and the charge acceptance tends to decrease. However, when the content of the polymer compound (P) is 400 ppm or less, it is considered that deterioration of charge acceptance performance is suppressed by setting the pull-out load ratio to 1.5 or more. In addition, by adding the polymer compound (P) to the negative electrode material, a hydrogen overvoltage in the negative electrode plate can be increased, so that the amount of overcharge can be reduced. As a result, the decrease in the electrolyte solution can be suppressed. There is a possibility that the lead-acid battery of the present invention realizes a small amount of overcharge, high charge acceptance performance, and a low permeation short circuit incidence in a well-balanced manner based on the above reasons.

(Example 2)

In Example 2, a plurality of types of lead-acid batteries are prepared under the same conditions as those of the lead-acid battery A24 of Example 1 (see Table 1) except that the number average molecular weight Mn of polypropylene glycol (PPG, polymer compound (P)) is changed. These plurality of types of lead-acid batteries are evaluated similarly to Example 1. Apart of the preparation conditions and evaluation results of these lead-acid batteries are shown in Table 3. The evaluation of lead-acid battery B3 indicates the evaluation of the lead-acid battery A24. Meanings of notes (*1) to (*5) in Table 3 are the same as meanings of the notes (*1) to (*5) in Table 1 and Table 2, respectively.

[Table 3]

| Battery No. | Preparation conditions | | (c) Amount of overcharge | | (b) Charge acceptance performance | | Permeation short circuit | |
|---|---|---|---|---|---|---|---|---|
| | Pull-out load ratio (*1) | Mn of PPG | Relative value (*2) | Evaluation (*3) | Relative value (*2) | Evaluation (*4) | Incidence (%) | Evaluation (*5) |
| B1 | 3 | 500 | 99 | B | 126 | A | 10 | A |
| B2 | | 1000 | 92 | A | 123 | A | 10 | A |
| B3(A24) | | 2000 | 89 | A | 120 | A | 10 | A |
| B4 | | 5000 | 60 | A | 118 | A | 10 | A |

As shown in Table 3, when the number average molecular weight of the polymer compound (P) is in the range of 500 to 5,000, a small amount of overcharge, high charge acceptance performance, and a low permeation short circuit incidence can be achieved. When the number average molecular weight of the polymer compound (P) is in the range of 1,000 to 5,000, the amount of overcharge can be particularly reduced.

(Example 3)

In Example 3, a plurality of types of lead-acid batteries are prepared under the same conditions as those of the lead-acid battery A25 (see Table 1) of Example 1 except that the type of the polymer compound (P) is changed. These plurality of types of lead-acid batteries are evaluated similarly to Example 1. Apart of the preparation conditions and evaluation results of these lead-acid batteries are shown in Table 4. The evaluation of lead-acid battery C1 indicates the evaluation of the lead-acid battery A25. Meanings of notes (*1) to (*5) in Table 4 are the same as the meanings of the notes (*1) to (*5) in Table 1 and Table 2, respectively. The content of each polymer compound (P) in the negative electrode material is 50 ppm (mass ratio). Also, the number average molecular weight (Mn) of each polymer compound (P) is in the range of 1,800 to 2,000.

[Table 4]

| Battery No. | Preparation conditions | | (c) Amount of overcharge | | (b) Charge acceptance performance | | Permeation short circuit | |
|---|---|---|---|---|---|---|---|---|
| | Pull-out load ratio (*1) | Polymer compound (P) | Relative value (*2) | Evaluation (*3) | Relative value (*2) | Evaluation (*4) | Incidence (%) | Evaluation (*5) |
| C1 (A25) | 3 | PPG | 83 | A | 121 | A | 0 | A |
| C2 | | PEG | 87 | A | 122 | A | 0 | A |
| C3 | | Polymer compound 1 | 84 | A | 124 | A | 0 | A |
| C4 | | Polymer compound 2 | 86 | A | 126 | A | 0 | A |

As the polymer compound (P) of lead-acid battery C2, polyethylene glycol (PEG) is used. As polymer compound 1 of lead-acid battery C3, polyoxyethylene polyoxypropylene butyl ether is used. The proportion of the oxypropylene units in the total monomer units of the polymer compound 1 is 43 mol%. As polymer compound 2 of lead-acid battery C4, polyoxypropylene acetic acid ester is used. Any of the polymer compounds used in Example 3 has a peak in the range of 3.2 ppm or more and 3.8 ppm or less in a chemical shift of $^1$H-NMR spectrum measured using deuterated chloroform as a solvent.
As shown in Table 4, even when a polymer compound (P) other than polypropylene glycol (PPG) is used, good results are obtained similarly as PPG.

INDUSTRIAL APPLICABILITY

The present invention can be used for a lead-acid battery.

DESCRIPTION OF REFERENCE SIGNS

1: lead-acid battery
2: negative electrode plate
3: positive electrode plate
4: separator
11: element
12: container
13: partition
14: cell chamber
15: lid
16: negative electrode terminal
17: positive electrode terminal

**Claims**

1. A lead-acid battery comprising:

   an element;
   an electrolyte solution; and
   a container that houses the element and the electrolyte solution, wherein
   the element includes a plurality of stacked positive electrode plates and a plurality of stacked negative electrode plates,
   the negative electrode plate contains a negative electrode material,
   the negative electrode material contains a polymer compound,
   the polymer compound has a peak in the range of 3.2 ppm or more and 3.8 ppm or less in a chemical shift of a $^1$H-NMR spectrum measured using deuterated chloroform as a solvent,
   a content of the polymer compound in the negative electrode material is 15 ppm or more and 400 ppm or less on a mass basis, and
   a pull-out load when the element is pulled out from the container is 1.5 times or more a weight of the element.

2. A lead-acid battery comprising:

   an element;
   an electrolyte solution; and
   a container that houses the element and the electrolyte solution, wherein
   the element includes a plurality of stacked positive electrode plates and a plurality of stacked negative electrode plates,
   the negative electrode plate contains a negative electrode material,
   the negative electrode material contains a polymer compound,
   the polymer compound contains an oxy $C_{2-4}$ alkylene unit as a repeating structure,
   a content of the polymer compound in the negative electrode material is 15 ppm or more and 400 ppm or less on a mass basis, and
   a pull-out load when the element is pulled out from the container is 1.5 times or more a weight of the element.

3. The lead-acid battery according to claim 2, wherein the polymer compound contains at least one selected from the group consisting of hydroxy compound containing the repeating structure of oxy $C_{2-4}$ alkylene units, etherified product of the hydroxy compound, and esterified product of the hydroxy compound.

4. The lead-acid battery according to claim 1 or 2, wherein the polymer compound is at least one selected from the group consisting of polyethylene glycol, an esterified product of polyethylene glycol, polypropylene glycol, and an esterified product of polypropylene glycol.

5. The lead-acid battery according to claim 4, wherein the polymer compound is polypropylene glycol.

6. The lead-acid battery according to any one of claims 1 to 5, wherein the polymer compound has a number average molecular weight of 1,000 or more.

7. The lead-acid battery according to claim 6, wherein the polymer compound has a number average molecular weight of 5,000 or less.

8. The lead-acid battery according to any one of claims 1 to 7, wherein the pull-out load when the element is pulled out from the container is 10.0 times or less the weight of the element.

Fig. 1

## INTERNATIONAL SEARCH REPORT

International application No.

**PCT/JP2021/039748**

### A. CLASSIFICATION OF SUBJECT MATTER

*H01M 4/14*(2006.01)i; *H01M 4/62*(2006.01)i; *H01M 10/06*(2006.01)i; *H01M 10/12*(2006.01)i
FI: H01M10/06 Z; H01M10/12 K; H01M4/14 Q; H01M4/62 B

According to International Patent Classification (IPC) or to both national classification and IPC

### B. FIELDS SEARCHED

Minimum documentation searched (classification system followed by classification symbols)

H01M4/14; H01M4/62; H01M10/06; H01M10/12

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/080420 A1 (GS YUASA INT LTD) 23 April 2020 (2020-04-23)<br>claim 5, paragraph [0042] | 1-8 |
| A | JP 9-147869 A (SHIN KOBE ELECTRIC MACH CO LTD) 06 June 1997 (1997-06-06)<br>claims 1-2, paragraph [0016] | 1-8 |
| A | JP 60-182662 A (NIHON DENCHI KK) 18 September 1985 (1985-09-18)<br>claims, p. 1, right column, line 14 to p. 3, upper left column, line 2 | 1-8 |
| A | JP 2019-71165 A (HITACHI CHEMICAL CO LTD) 09 May 2019 (2019-05-09)<br>claims 1, 5, paragraphs [0010], [0073]-[0074], [0092], fig. 2 | 1-8 |
| P, A | WO 2020/241884 A1 (GS YUASA INT LTD) 03 December 2020 (2020-12-03)<br>claims 1-4 | 1-8 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/039748**

| Patent document cited in search report | | | Publication date (day/month/year) | Patent family member(s) | | | Publication date (day/month/year) |
|---|---|---|---|---|---|---|---|
| WO | 2020/080420 | A1 | 23 April 2020 | (Family: none) | | | |
| JP | 9-147869 | A | 06 June 1997 | (Family: none) | | | |
| JP | 60-182662 | A | 18 September 1985 | (Family: none) | | | |
| JP | 2019-71165 | A | 09 May 2019 | WO | 2017/149871 | A1 | |
| WO | 2020/241884 | A1 | 03 December 2020 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003051288 A
- JP 2009123433 A
- JP 60182662 A